# EUROPEAN PATENT APPLICATION

(11) **EP 2 058 366 A1**
(43) Date of publication of application: **13.05.2009**
(21) Application number: 07792782.0
(22) Date of filing: 21.08.2007
(51) Int. Cl.: C08L 63/00

(54) **CASTING RESIN COMPOSITION, INSULATING MATERIAL USING THE SAME, AND INSULATING STRUCTURE**

(30) Priority: 23.08.2006 JP 2006226745; 02.08.2007 JP 2007202179
(71) Applicant: Kabushiki Kaisha Toshiba, Minato-ku, Tokyo 105-8001 (JP)
(72) Inventor: IMAI, Takahiro c/o Intellectual Property Division, Tokyo 105-8001 (JP); OZAKI, Tamon c/o Intellectual Property Division, Tokyo 105-8001 (JP); SAWA, Fumio c/o Intellectual Property Division, Tokyo 105-8001 (JP); KINOSHITA, Susumu c/o Intellectual Property Division, Tokyo 105-8001 (JP); KOMIYA, Gen c/o Intellectual Property Division, Tokyo 105-8001 (JP); MURAYAMA, Kiyoko c/o Intellectual Property Division, Tokyo 105-8001 (JP); SHIMIZU, Toshio c/o Intellectual Property Division, Tokyo 105-8001 (JP); SAKAGUCHI, Osamu c/o Intellectual Property Division, Tokyo 105-8001 (JP); HOMMA, Mitsutaka c/o Intellectual Property Division, Tokyo 105-8001 (JP); TANAKA, Toshikatsu c/o Intellectual Property Division, Tokyo 105-8001 (JP)
(74) Representative: HOFFMANN EITLE
(86) International application number: PCT/JP2007/066170
(87) International publication number: WO 2008/023692

(57) **Abstract**

An insulating cast resin composition including an epoxy resin having two or more epoxy groups per single molecule; a micro-particle including one or more substances selected from the group of silica, alumina and mullite; an elastomer particle; and a nano-particle including one or more substances selected from the group of layer silicates, oxides and nitrides.

## Description

### TECHNICAL FIELD

The present invention relates to a cast resin composition providing insulation in devices utilizing high voltage electric power such as electric transmission or transformation devices, an insulator material and an insulating structure utilizing the cast resin composition.

### BACKGROUND ART

At various locations inpower supply networks linkingpower plants with customers, electric transmission and transformation facilities are installed, and the electric transmission and transformation facilities are comprised of switch gears which enclose vacuum valves, gas insulating circuit breakers in which sulfurhexafluoride gas is filled, and gas insulated transmission line devices for the purpose of making and breaking of high voltage circuits or such. In these electric transmission and transformation devices, any insulator material made of any resin composition is used for the purpose of insulation of the vacuum valves and high voltage conductors.

As the insulator material used for the aforementioned purpose requires mechanical strength, thermal resistance and electrical insulation, and further in view of cost reduction, epoxy resins which are thermosetting resins are applied thereto. An art is known, in which various particles are dispersed in an epoxy resin further for the purpose of improvement in mechanical properties and electric insulation. Japanese Patent Unexamined Publications 2002-15621, 2001-160342 and 2006-57017 disclose related arts.

### DISCLOSURE OF INVENTION

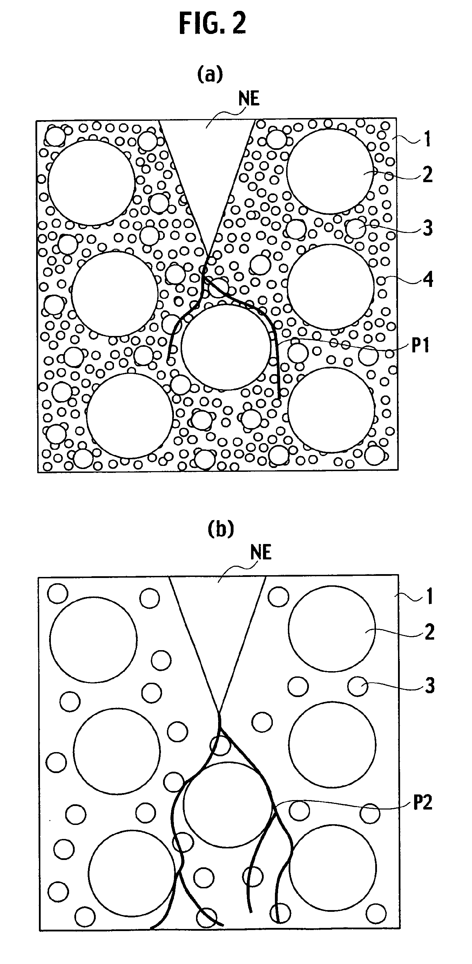

In cases of utilizing insulator materials according to the aforementioned related arts as cast resins in which conductors are molded and held, some technical problems may arise. First, unless a thermal expansion coefficient of the insulator material is made sufficiently close to that of the conductor, it raises a concern about separation at the interface between the resin and the conductor molded therein. Further, as the conductor and the insulator material extremely closely adhere, degradation of the insulator material caused by that electric discharge is localized and thus rapidly dendritically progresses through regions short of resistivity in the insulator material (see Fig. 2 of the drawings. Referred to as "treeing" hereinafter). As this progress is extremely rapid, a breakdown time of the cast resin solely depends on quality of resistance to treeing. In accordance with studies by the present inventors, an insulator material of the art disclosed by Japanese Patent Unexamined Publication No. 2002-15621 has a drawback of insufficient quality of resistance to treeing, and an insulator material of the art disclosed by Japanese Patent Unexamined Publication No. 2006-57017 has a drawback in that separation between the conductor and the insulator material is likely to occur as a difference in thermal expansion coefficient is relatively large.

The present invention has been achieved to overcome these drawbacks of these arts and its object is to provide a cast resin composition having high adhesion with a conductor molded therein and high quality of resistance to treeing, an insulator material, and an insulator structure therewith.

According to a first aspect of the present invention, an insulating cast resin composition comprises an epoxy resin having two or more epoxy groups per single molecule; a micro-particle including one or more substances selected from the group of silica, alumina and mullite; an elastomer particle; and a nano-particle including one or more substances selected from the group of layer silicates, oxides and nitrides.

According to a second aspect of the present invention, an insulator material comprises a cured matter of the insulating cast resin.

According to a third aspect of the present invention, an insulating structure comprises a conductor and an insulating member configured to insulate a conductor from any other member, which consists essentially of the insulator material.

### BRIEF DESCRIPTION OF THE DRAWINGS

- [FIG. 1]: Fig. 1 is a drawing schematically illustrating a state of dispersion of particles in an insulator material in accordance with an embodiment of the present invention.
- [FIG. 2]: Fig. 2 is a schematic drawing illustrating a state of progress of degradation paths from a tip end of a needle electrode.
- [FIG. 3]: Fig. 3 is a schematic drawing illustrating a state of erosion by electric discharge from a rod electrode.
- [FIG. 4]: Fig. 4 is a drawing illustrating an example of an insulating structure in accordance with the present invention.
- [FIG. 5]: Fig. 5 is a drawing illustrating another example of an insulating structure in accordance with the present invention.
- [FIG. 6]: Fig. 6 is an SEM image of a cross section of an insulator material of a comparative example 1.

### BEST MODE FOR CARRYING OUT THE INVENTION

Description will be given hereinafter with respect to an embodiment of the present invention with reference to the appended drawings.

As used in the present description and the appended claims, a phrase "treeing degradation" means "electric degradation which dendritically progresses in the insulator material", and a term "treeing" means such progress.

A cast resin composition in accordance with the embodiment of the present invention in outline comprises (A) an epoxy resin having two or more epoxy groups per single molecule, (B) micro-particles including one or more substances selected from the group of silica, alumina and mullite, (C) elastomer particles, (D) nano-particles including one or more substances selected from the group of layer silicates, oxides and nitrides.

### (A) EPOXY RESIN

As the epoxy resin, any proper curable compound having two or more three-membered rings, each of which consists of two carbon atoms and one oxygen atom, per single molecule may be applicable, and any particular limitation is not applied.

As preferred examples of the epoxy resin, the following compounds can be exemplified, namely: bisphenol A type epoxy resins obtained by condensation of epichlorohydrin and polyhydric phenol such as one of bisphenols or polyhydric alcohol; brominated bisphenol A type epoxy resins; hydrogenated bisphenol A type epoxy resins; bisphenol F type epoxy resins; bisphenol S type epoxy resins; bisphenol AF type epoxy resins; biphenyl type epoxy resins; naphthalene type epoxy resins; fluorine type epoxy resins; novolac type epoxy resins; phenol novolac type epoxy resins; ortho-cresol novolac type epoxy resins; tris(hydroxyphenyl)methane type epoxy resins; glycidylether type epoxy resins such as tetraphenylolethan type epoxy resins; glycidylester type epoxy resins obtained by condensation of epichlorohydrin and carboxylic acid; heterocyclic epoxy resins such as hydantoin type epoxy resins obtained by reactions of triglycidylisocyanate, or epichlorohydrin, and any of hydantoins.

To cure any of the epoxy resins, a curing agent for epoxy resins is added. As the curing agent for epoxy resins, any substances capable of reacting with an epoxy resin to cure the epoxy resin are properly applicable, and a type thereof is not limited. As such the curing agent for epoxy resins, amine-system curing agents, acid-anhydride-system curing agents, imidazole-system curing agents, polymercaptan-system curing agents, phenol-system curing agents, Lewis acid system curing agents, and isocyanate-system curing agents can be exemplified for example.

As concrete examples of the amine-system curing agents, ethylenediamine, 1,3-diaminopropane, 1,4-diaminobutane, hexamethylenediamine, dipropylenediamine, polyetherdiamine, 2,5-dimethylhexamethylenediamine, trimethylhexamethylenediamine, diethylenetriamine, iminobispropylamine, bis(hexamethyl)triamine, triethylenetetramine, tetraethylenepentamine, pentaethylenepentamine, aminoethylethanolamine, tri(methylamino)hexane, dimethylaminopropylamine, diethylaminopropylamine, methyliminobispropylamine, menthanediamine, isophoronediamine, bis(4-amino-3-methyldicyclohexyl)methane, diaminodicyclohexylmethane, bis(aminomethyl)cyclohexane, N-aminoethylpiperazine, 3,9-bis(3-aminopropyl)2,4,8,10-tetraoxaspiro(5,5)undecane, m-xylenediamine, metaphenylenediamine, diaminodiphenylmethane, diaminodiphenylsulfonates, diaminodiethyldiphenylmethane, dicyandiamide, and hydrazide organic acid can be exemplified for example.

As concrete examples of the acid-anhydride-system curing agents, dodecenyl succinic anhydride, polyadipic acid anhydride, polyazelaic acid anhydride, polysebacic acid anhydride, poly(ethyloctadecanedioic acid) anhydride, poly(phenylhexadecanedioic acid) anhydride, methyltetrahydrophthalic anhydride, methylhexahydrophthalic anhydride, methyl-HIMIC anhydride, hexahydrophthalic anhydride, tetrahydrophthalic anhydride, trialkyl tetrahydrophthalic anhydride, methylcyclohexenedicarboxylic acid anhydride, phthalic anhydride, trimellitic anhydride, pyromellitic anhydride, benzophenonetetracarboxylic acid, ethyleneglycolbistrimellitate, glyceroltristrimellitate, HET anhydride, tetrabromophthalic anhydride, nadic anhydride, methylnadic anhydride, and polyazelaic anhydride can be exemplified for example.

As concrete examples of the imidazole-system curing agents, 2-methylimidazole, 2-ethyl-4-methylimidazole, and 2-heptadecylimidazole can be exemplified for example. Further, as concrete examples of the polymercaptan-system curing agents, polysulfide and thioester can be exemplified for example.

Further, as using the curing agent for epoxy resins together, any accelerator for epoxy resins which accelerates or regulates the curing reaction of the epoxy resins may be added. In particular, in a case where an acid anhydride system curing agent is added, as its curing reaction is relatively slow as compared with that of other curing agents such as an amine system curing agent, an accelerator for epoxy resins is frequently applied. As the accelerator for epoxy resins, tertiary amine or its salt, quaternary ammonium compounds, imidazole, alkali metal alkoxide or such is preferably applied.

### (B) MICRO-PARTICLES

As the micro-particles, particles of any of silica, alumina and mullite, or a mixture of two or more thereof can be exemplified.

The micro-particles are preferably mixed in a ratio of 100-500 parts in weight thereof to 100 parts in weight of the epoxy resin. If the mixing ratio is made such that less than 100 parts in weight of the micro-particles are admixed with 100 parts of the epoxy resin, a thermal expansion coefficient of the cast resin compound becomes large, whereby leading to separation from the metal conductor molded in the cast resin compound, as caused by difference of the thermal expansion coefficient from that of the metal conductor. On the other hand, if the mixing ratio of the micro-particles exceeds 50 parts in weight with respect to 100 parts in weight of the epoxy resin, viscosity of the cast resin compound increases and therefore it becomes disadvantageous in view of work of mixing of the micro-particles and work with respect to casting.

A primary particle grain size of the micro-particles is preferably in a range of 1-100µm. If the primary particle grain size of the micro-particles departs from the range of 1-100µm, viscosity of the cast resin compound increases and therefore it becomes disadvantageous in view of work of mixing of the micro-particles and work with respect to casting.

### (C) ELASTOMER PARTICLES

As the elastomer particles, particles of a core-shell structure consisting of an elastomer can be applied. As a preferable elastomer, styrene-butadiene-methacrylic acid rubber copolymer, acrylic rubber, styrene-butadiene rubber and such can be exemplified. Further, these can be used independently or by mixing two or more of them. Further, elastomer particles even if not having a core-shell structure may be applied if any particular dispersing agent or dispersing method is applied so as to uniformly disperse the particles in the resin.

The elastomer particles are preferably mixed in a ratio of 1-30 parts thereof in weight with 100 parts in weight of the epoxy resin. If the mixing ratio is made such that less than 1 part in weight of the elastomer particles are mixed with 100 parts in weight of the epoxy resin, toughness of a cured matter of the cast resin compound decreases. On the other hand, if the mixing ratio of the elastomer particles exceeds 30 parts in weight with respect to 100 parts in weight of the epoxy resin, viscosity of the cast resin compound increases and therefore it becomes disadvantageous in view of work of mixing of the micro-particles and work with respect to casting.

A primary particle grain size of the elastomer particles is preferably in a range of 0.1-10µm. If the primary particle grain size of the elastomer particles departs from the range of 0.1-10µm, toughness of the cast resin compound decreases. Further, viscosity of the cast resin compound increases and therefore it becomes disadvantageous in view of work of mixing of the micro-particles and work with respect to casting.

### (D) NANO-PARTICLES

As the nano-particles, layer silicates, oxides and nitrides can be exemplified.

As the layer silicates, at least one selected from the group of a group of smectite, a group of mica, a group of vermiculite, and a group of mica isinglass can be exemplified. As the layer silicates falling under the group of smectite, montmorillonite, hectorite, saponite, sauconite, beidellite, stevesite, and nontronite can be exemplified for example. As the layer silicates falling under the group of mica, chlorite, phlogopite, lepidolite, muscovite, biotite, paragonite, margarite, tainiolite, and tetrasilicic mica can be exemplified for example. As the layer silicates falling under the group of vermiculite, trioctahedral vermiculite and dioctahedral vermiculite can be exemplified for example. As the layer silicates falling under the group of mica isinglass, muscovite, biotite, paragonite, lepidolite, margarite, clintonite, and anandite can be exemplified for example. Among them, using pyllosilicates falling under the group of smectite is preferable in view of ability of dispersion in the epoxy resin. The pyllosilicates may include any single substance or a mixture of two or more of these substances.

Meanwhile, the layer silicates have a structure in which silicate layers are laminated and can therefore retain various substances such as ions, molecules and clusters in respective interlayer spaces between the layers by an ion exchange reaction (intercalation). For example, respective interlayer spaces between layers can retain various organic compounds and therefore it is possible to give particular functions depending on the organic compounds to the layer silicate. For example, to make the spaces in between the layers retain an organic compound having affinity with the epoxy resin, it is possible to give affinity with the epoxy resin to the layer silicate retaining the organic compound. Although any limitation is applied to the organic compounds intercalated in between the layers, quaternary ammonium ions are preferable in view of a degree of being intercalated in interlayer spaces between layers by an ion exchange treatment.

As the quaternary ammonium ions, tetrabutylammonium ion, tetrahexylammonium ion, dihexylmethylammonium ion, dioctyldimethylammonium ion, hexatrimethylammonium ion, octatrimethylammonium ion, dodecyltrimethylammonium ion, hexadecyltrimethylammoniumion, stearyltrimethylammoniumion, docosenyltrimethylammonium ion, cetyltrimethylammonium ion, cetyltriethylammonium ion, hexadecylammonium ion, tetradecyldimethylbenzilammonium ion, stearyldimethylbenzilammonium ion, dioleyldimethylammonium ion, N-methyldiethanollaurylammonium ion, dipropanolmonomethyllaurylammonium ion, dimethylmonoethanollaurylammonium ion, polyoxyethylenedodecylmonomethylammonium ion, dimethylhexadecyloctadecylammonium ion, trioctylmethylammonium ion, tetramethylammonium ion, and tetrapropylammonium ion can be exemplified. Any single or a mixture of two or more of these quaternary ammonium ions can be retained in interlayer spaces between layers of the layer silicate.

As the oxides, silica, alumina, titanium oxide, bismuth trioxide, cerium dioxide, cobalt monoxide, copper oxide, iron trioxide, holmium oxide, indium oxide, manganese oxide, stannum oxide, yttrium oxide, and zinc oxide can be exemplified. These oxides may include any single or a mixture of two or more of these substances.

As the nitrides, nitrides of Ti, Ta, Nb, Mo, Co, Fe, Cr V, Mn, Al, Si and such can be exemplified. These nitrides may include any single or a mixture of two or more of these substances.

A primary particle grain size of the nano-particles is preferably in a range of 1-1000nm. If the primary particle grain size of the nano-particles departs from the range of 1-1000nm, improvement of electric insulation is insufficient. Further, viscosity of the cast resin compound increases and therefore it becomes disadvantageous in view of work of mixing of the micro-particles and work with respect to casting.

Surfaces of the micro-particles, the elastomer partcles and the nano-particles may be treated with proper modification or coating. The modification or the coating is achieved for the purpose of improving adhesion with the epoxy resin or suppressing aggregation in the epoxy resin. As a coupling agent for the modification, γ-glycideoxy-propyltrimethoxysilane, γ-aminopropyl-trimethoxysilane, vinyltriethoxysilane, 3-methacryloxypropyltrimethoxysilane, any silane coupling agent such as 3-glycidyloxypropyl-trimethoxysilane, titanate group coupling agents, and aluminum group coupling agents can be exemplified. Further, as the surface treatment agent for the modification, aluminum laurate, aluminum stearate, ferric stearate alumina, silica, zirconia, and silicone can be exemplified. Alternatively, two or more of these agents may be mixed and then applied.

The cast resin compound may appropriately include any additives such as an anti-drop agent, an anti-sedimentation agent, an antifoaming agent, a leveling agent, a slip agent, a dispersion agent, a base wetting agent and such.

On the basis of the aforementioned respective ingredients, the cast resin compound is produced in the following way. The first is to admix the nano-particles with the epoxy resin with applying shear force thereto. By applying the shear force, it is enabled to uniformly disperse the nano-particles in the epoxy resin. As an apparatus for admixing, any apparatus which is capable of mixing powder with applying shear force can be used, and its type is not particularly limited. As a concrete example thereof, a bead mill mixer, a three-bar roll mill mixer, a homogenizer mixier, Labo Plastmill Mixer (Toyo Seiki Seisaku-sho, LTD.), Miracle K. C. K. (Asada Iron Works Co., Ltd.), Distromix (A-Tech Japan Co.,Ltd.), and Clear S55 (M Technique Co.,Ltd.) can be exemplified.

As the nano-particles at the early stage of admixing are in a condition of weakly aggregating, the mixture thereof with the epoxy resin presents an opaque appearance. With progress of mixing, dispersion of the nano-particles into the mixture progresses, and, when mixing sufficiently progresses, the mixture comes to present a transparent appearance. By confirming the transparent appearance, one can judge whether sufficient mixing is achieved.

Surfaces of the nano-particles may be in advance modified by means of a coupling agent or a surface treatment agent. Thereby, adhesion interfaces between the epoxy resin and the nano-particles can be strengthened. Further in a case where layer silicate is used as the nano-particles, a treatment by which organic compound (for example, quaternary ammonium compounds) is made retained in between its layers may be achieved in advance. Thereby, affinity with the epoxy resin is given to the nano-particles and therefore more uniform dispersion into the epoxy resin is made easier.

Next, after admixing and dispersing the micro-particles and the elastomer particles into the epoxy resin in which the nano-particles are dispersed, by adding and mixing an accelerator for epoxy resins therein, the objective cast resin compound is obtained. Then, by pouring the cast resin compound into a mold, carrying out vacuumdefoaming, and subsequently thermally curing the compound, the insulating cast resin is obtained. Meanwhile, in the aforemendioned production steps of the cast resin compound, additives capable of being arbitrarily added as mentioned above are appropriately added and mixed as needs arise.

As the nano-particles are very fine, to disperse the particles uniformly in nano-scale requires to carry out shearing mixing. By carrying out shearing mixing, after filling the micro-particles and the elastomer particles, any spaces among the nano-particles and the elastomer particles, and among the nano-particles and the mircro-particles in the cured matter can be made to be 1µm or less. As the spaces among the particles become 1µm or less, high toughness and excellent electric insulation performance are developed.

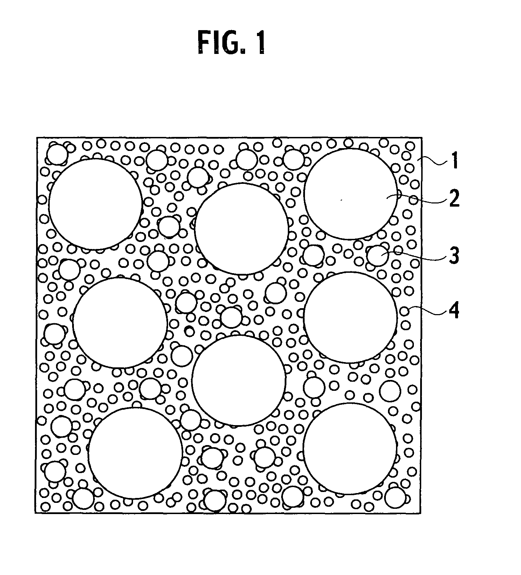

Fig. 1 is a schematic drawing of a dispersion state of the respective particles in the insulator material in accordance with the present embodiment. The insulator material includes the epoxy resin 1, the elastomer particles 2, the micro-particles 3, and the nano-particles 4. In the epoxy resin 1, the elastomer particles 2 are dispersed and, in spaces among the elastomer particles 2, the micro-particles 3 are dispersed, and, further among them, the nano-particles 4 are dispersed. The elastomer particles 2, the micro-particles 3, and the nano-particles 4 are respectively uniformly dispersed in the epoxy resin 1.

As the insulator material in accordance with the present embodiment has high toughness and excellent electric insulating performance, it is preferably applied to an insulator member which covers a vacuum valve in a switch gear housing a circuit breaker mechanism and insulates the vacuum valve from the other members, a structural member which insulatively supports high-voltage conductors in a metal casing of a gas insulating circuit breaker and an gas insulated transmission line device, and such.

Meanwhile, application of the insulator material according to the present embodiment is not limited to use as the aforementioned insulator member for the switch gear, the structural member for the gas insulating circuit breaker and such, and may be applicable to various uses, such as finishing varnish of turbine end portions for electric generators, insulating rods for breakers, insulating paint, molded insulating members, immersion resin, and coating materials for cables. Further in some cases, it is applicable to highly thermally conductive insulating sheets for power unit insulating sealers, IC substrates, interlayer insulating film for LSI devices, laminated substrates, sealers for semiconductors, and such.

As described above, the insulator material in accordance with the present embodiment is applicable to various uses. More specifically, with progress of downsizing, capacity increase, frequency band elevation, voltage increase, and severity increase about usage environment of industrial instruments, heavy electric machineries, electric and electronic devices, cast insulators and such are subject to demand for improvement of performance, reliability, quality, stability in quality and such. The insulator material of the present invention meets these requirements, and, by selectively using the aforementioned component materials, is applicable to various industrial instruments, heavy electric machineries, electric and electronic devices, as an epoxy cast insulator, an epoxy immersion insulator or such.

Next, working examples of the present invention will be described.

### (EXAMPLE 1)

In 100 parts in weight of an epoxy resin (bisphenol A type epoxy resin), 10 parts in weight of a layer silicate compound (primary grain size: 1 to several hundreds nanometers) having quaternary ammonium ions intercalated in between the layers thereof as nano-particles, and 1 part in weight of a coupling agent of an epoxysilane group were added and mulled with applying shearing force. Mulling by shearing force is kept doing until the mixture changes from being opaque into being transparent. Next, in this mixture, 10 parts in weight of styrene-butadiene-methacrylic acid copolymer particles which have a core-shell structure, as elstomer particlers, and 340 parts in weight of silica particles as micro-particles were arranged, mixed and dispersed. Next, in this mulled substance, 86 parts in weight of an acid-anhydride-system curing agent and 1 part in weight of an accelerator for acid-anhydride-system curing agents were added, and mixing for 10 minutes at 80 degrees C to prepare a cast resin composition. This cast resin composition was poured into a mold heated in advance up to 100 degrees C, subj ect to vacuum defoaming, and subsequently treated with a curing treatment in conditions of 100 degrees C x 3 hours (primary curing) and 150 degrees C x 15 hours (secondary curing) to produce an objective cast insulator (insulator material). This cast insulator was served for property tests described later.

### (EXAMPLE 2)

In 100 parts in weight of an epoxy resin (bisphenol A type epoxy resin), 10 parts in weight of titanium particles as nano-particles (primary grain size: 15 nanometers) and 1 part in weight of a coupling agent of a titanate group were added and mulled with applying shearing force. Next, in this mixture, 10 parts in weight of styrene-butadiene-methacrylic acid copolymer particles which have a core-shell structure, as elstomer particlers, and 340 parts in weight of silica particles as micro-particles were arranged, mixed and dispersed. Next, in this mulled substance, 86 parts in weight of an acid-anhydride-system curing agent and 1 part in weight of an accelerator for acid-anhydride-system curing agents were added, and mixing for 10 minutes at 80 degrees C to prepare a cast resin composition. This cast resin composition was poured into a mold heated in advance up to 100 degrees C, subject to vacuumdefoaming, and subsequently treated with a curing treatment in conditions of 100 degrees C x 3 hours (primary curing) and 150 degrees C x 15 hours (secondary curing) to produce an objective cast insulator (insulator material). This cast insulator was served for property tests described later.

### (EXAMPLE 3)

In 100 parts in weight of an epoxy resin (bisphenol A type epoxy resin), 35 parts in weight of silica particles as nano-particles (primary grain size: 1 to several hundreds nanometers) was admixed without applying shearing force. Next, in this mixture, 10 parts in weight of styrene-butadiene-methacrylic acid copolymer particles which have a core-shell structure, as elstomer particlers, and 340 parts in weight of silica particles as micro-particles were arranged, mixed and dispersed. Next, in this mulled substance, 86 parts in weight of an acid-anhydride-system curing agent and 1 part in weight of an accelerator for acid-anhydride-system curing agents were added, and mixing for 10 minutes at 80 degrees C to prepare a cast resin composition. This cast resin composition was poured into a mold heated in advance up to 100 degrees C, subj ect to vacuum defoaming, and subsequently treated with a curing treatment in conditions of 100 degrees C x 3 hours (primary curing) and 150 degrees C x 15 hours (secondary curing) to produce an objective cast insulator (insulator material). This cast insulator was served for property tests described later.

### (COMPARATIVE EXAMPLE 1)

In 100 parts in weight of an epoxy resin (bisphenol A type epoxy resin), 10 parts in weight of styrene-butadiene-methacrylic acid copolymer particles which have a core-shell structure, as elstomer particlers, and 340 parts in weight of silica particles as micro-particles were arranged, mixed and dispersed. Next, in this mulled substance, 86 parts in weight of an acid-anhydride-system curing agent and 1 part in weight of an accelerator for acid-anhydride-system curing agents were added, and mixing for 10 minutes at 80 degrees C to prepare a cast resin composition. This cast resin composition was poured into a mold heated in advance up to 100 degrees C, subj ect to vacuum defoaming, and subsequently treated with a curing treatment in conditions of 100 degrees C x 3 hours (primary curing) and 150 degrees C x 15 hours (secondary curing) to produce an objective cast insulator (insulator material). This cast insulator was served for property tests described later.

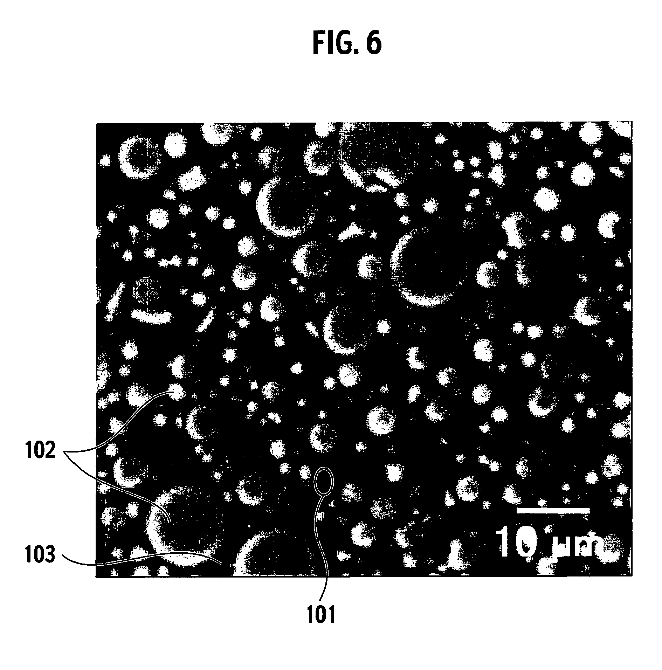

A SEM image of a cross section of the cast insulator according to the comparative example 1 is shown in Fig. 6. It is observed that micro-particles 102 and elastomer particles 103 in a level of several micrometers are dispersed in the epoxy resin 101, however particles of a nanometer-order further smaller than them are not observed therein.

### (COMPARATIVE EXAMPLE 2)

In 100 parts in weight of an epoxy resin (bisphenol A type epoxy resin), 10 parts in weight of a layer silicate compound (primary grain size: 1 to several hundreds nanometers) having quaternary ammonium ions intercalated in between the layers thereof as nano-particles were added, and mulled with applying shearing force. Mulling by shearing force is kept doing until the mixture changes from being opaque into being transparent. Next, in this mulled substance, 86 parts in weight of an acid-anhydride-system curing agent and 1 part in weight of an accelerator for acid-anhydride-system curing agents were added, and mixing for 10 minutes at 80 degrees C to prepare a cast resin composition. This cast resin composition was poured into a mold heated in advance up to 100 degrees C, subject to vacuumdefoaming, and subsequently treated with a curing treatment in conditions of 100 degrees C x 3 hours (primary curing) and 150 degrees C x 15 hours (secondary curing) to produce an objective cast insulator (insulator material). This cast insulator was served for property tests described later.

### (COMPARATIVE EXAMPLE 3)

In 100 parts in weight of an epoxy resin (bisphenol A type epoxy resin), 10 parts in weight of titanium particles as nano-particles (primary grain size: 15 nanometers) and 1 part in weight of a coupling agent of a titanate group were added and mulled with applying shearing force. Next, in this mixture, 10 parts in weight of styrene-butadiene-methacrylic acid copolymer particles which have a core-shell structure, as elstomer particlers, was arranged, mixed and dispersed. Next, in this mulled substance, 86 parts in weight of an acid-anhydride-system curing agent and 1 part in weight of an accelerator for acid-anhydride-system curing agents were added, and mixing for 10 minutes at 80 degrees C to prepare a cast resin composition. This cast resin composition was poured into a mold heated in advance up to 100 degrees C, subject to vacuum defoaming, and subsequently treated with a curing treatment in conditions of 100 degrees C x 3 hours (primary curing) and 150 degrees C x 15 hours (secondary curing) to produce an objective cast insulator (insulator material). This cast insulator was served for property tests described later.

Filledparticles and the production process of the examples 1-3 and the comparative example 1 are summarized and illustrated in Table 1.

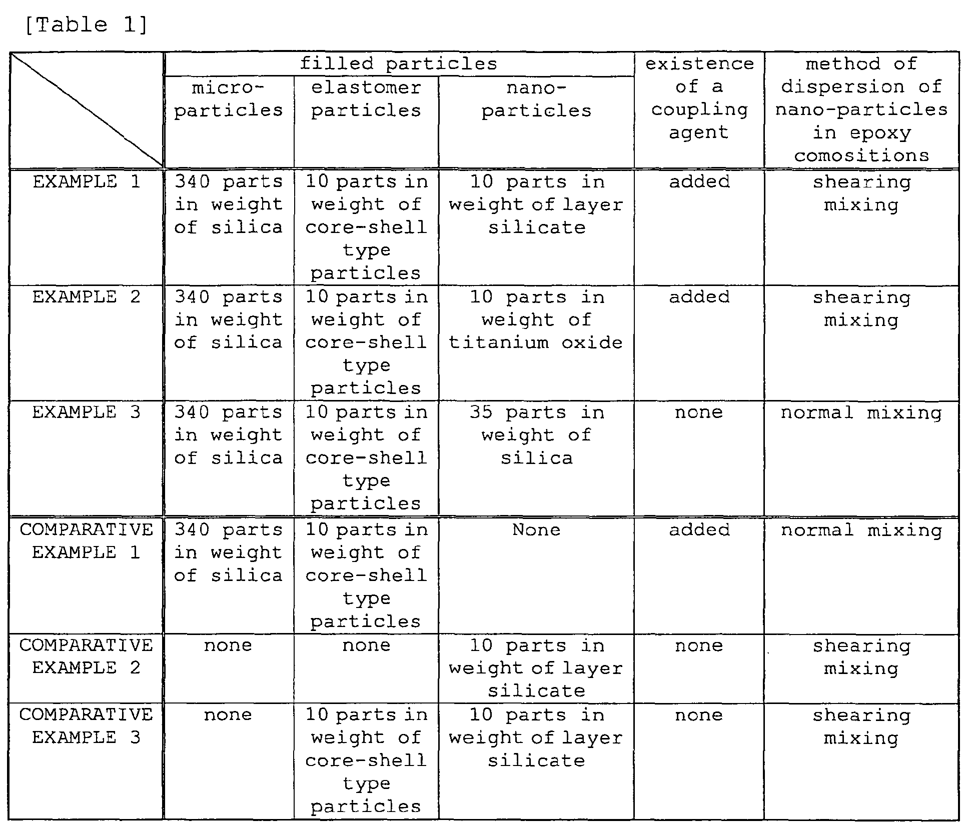

Next, in regard to the cast insulators according to the examples 1-3 and the comparative examples 1-3, measurements of fracture toughnesses, breakdown times, anti partial discharge degradation properties, thermal expansion coefficients, and resin viscosities before curing were carried out in the following ways.

### (MESUREMENT METHOD OF FRACTURE TOUGHNESS)

In accordance with ASTM D5045-91, initial cracks were generated in compact tension test pieces, tensile loads were applied, and fracture toughness values (K_{IC}) were calculated from loads at which cracks progress so as to fracture. Further, the crosshead speed is 1mm/min and the measurement temperature is a room temperature.

### (MESUREMENT METHOD OF BREAKDOWN TIME)

Test pieces in that needles are molded in cast resin compositions were produced, conductive paint was coated on bottom portions of these test pieces, the test pieces were set on plane electrodes, and thereafter a voltage of 10kV-1kHz was applied to the needles, and time required to cause breakdown was measured. A gap between the tip of the needle electrode and the plane electrode was 3mm.

### (MEASUREMENT OF DEGRADATION DEPTH MADE BY PARTIAL DISCHARGE)

Plate-like test pieces of 1mm in thickness were cut out from the cast insulators and rod electrodes were set with leaving gaps of 0.2mm from surfaces of the test pieces. By applying a voltage of 4kV to the rod electrode, each plate-like test piece was exposed to partial discharge. After elapse of 1440 hours, degradation depth was measured at a part where discharge degradation was severe.

### (MEASUREMENT METHOD OF THERMAL EXPANSION COEFFICIENT)

By using rectangular parallelepiped test pieces of 5mm long x 5mm wide x 10mm high from the produced cast insulators, thermal expansion coefficients (α₁) were obtained by means of a thermomechanical analyzer. The temperature increase rate was 2 degrees C/min., and the compression load was 0.05N.

### (MEASUREMENT METHOD OF RESIN VISCOSITY)

After dispersing the respective particles in the epoxy compositions, and further after adding the curing agent for epoxy resins, cast resin compositions before thermal curing was warmed up to 60 degrees C and measured by a B-type viscometer.

Evaluation results about the cast insulators and the cast resin compositions before curing according to the examples 1-3 and the comparative examples 1-3 are summarized and illustrated in Table 2.

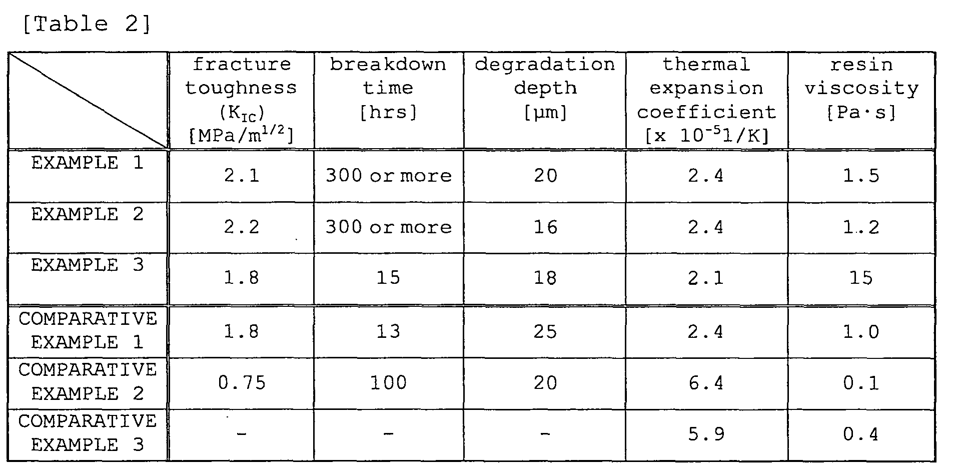

As illustrated in the test results of Table 2, the cast insulators according to the examples 1-3 have high toughness and excellent performance of electrical insulation, and these thermal expansion coefficients are lowered as compared with the cast insulators according to the comparative examples 1-3. As comparing the examples and the comparative examples hereinafter, concrete actions and effects of the present invention will be described.

First, to compare the examples 1 and 2 with the comparative example 1, actions and effects on fracture toughness provided by mixing of the nano-particles become accountable. The cast insulators according to the examples 1 and 2 are higher in fracture toughness than the comparative example 1 by the effect of the filled nano-particles. This is an effect given by that the nano-particles dispersed in the epoxy resin suppress progress of cracks. While it is generally well acknowledged that filling of the elastomer particles as in the comparative example 1 improves fracture toughness, in the example 1, to fill the nano-particles along with the elasomer particles therein achieves higher fracture toughness than those of existing arts.

Further, to compare the examples 1 and 2 with the comparative examples 2 and 3, actions and effects provided by mixing of the micro-particles and the elastomer particles become accountable. As 100-500 parts in weight of the micro-particles relative to 100 parts in weight of the epoxy compositions are filled in the cast insulators according to the examples 1 and 2, these thermal expansion coefficients are low in the same range of that of aluminum generally used as conductors. To match the thermal expansion coefficients of the cast insulator and the conductor prevents separation of interfaces between the conductor and the cast insulator caused by heat generated in operation of high-voltage devices. On the other hand, thermal expansion coefficients of the cast insulators according to the comparative examples 2 and 3 in which the micro-particles are not filled are prominently high as compared with those of the cast insulators according to the examples 1 and 2. If a great difference exists between the thermal expansion coefficients of the conductor and the cast insulator, the cast insulator will be degraded by partial discharge generated at separated parts in the conductor/resin interfaces.

Further, to compare the examples 1 and 2 with the comparative examples 1 and 2, effects provided by mixing of the micro-particles and the elastomer particles together in the epoxy composition become accountable. In the measurement of the breakdown time by using the needle electrode, the cast insulators according to the examples 1 and 2 are greatly longer in breakdown time than the cast insulators according to the comparative examples 1 and 2. By comparison with the comparative example 1, is can be understood that mixing of the nano-particles elongate the breakdown time. On the other hand, by comparison with the comparative example 2 in which the nano-particles are mixed, it is understood that the breakdown times of the cast insulators of the examples 1 and 2 are also longer, therefore this effect cannot be accountable based on the effect of the nano-particles alone. It is understood that any combined effects provided by the micro-particles and the elastomer particles exist.

The process of deterioration of cast insulators in breakdown by using needle electrodes can be explained in the following way. As shown in Fig. 2(b), in the cast insulator according to the comparative example 1, a degradation path (a electric tree) P2 emergent from a tip of a needle electrode NE selectively degrades the part of the epoxy resin 1 and the elastomer particles 3, both of which are less resistive to degradation under high electric fields, and thereby progresses. On the other hand, in the cast insulators according to the examples 1 and 2, as shown in Fig. 2(a), as the nano-particles 4, which have resistance to progress of the degradation path P1 under high electric fields, are dispersed, the insulators can suppress progress of the degradation path in the part of the epoxy resin 1. As the elastomer particles 3 are surrounded by the nano-particles 4, they are protected from progress of the degradation path. Further, the cast insulators of the examples 1 and 2 show longer breakdown times than the cast insulator of the comparative example 2 in which only the nano-particles are filled. The cast insulator of the comparative example 2 suppresses progress of the electric tree, whereas, as well as the effect of the nano-particles, the examples 1 and 2 show very long breakdown times as the volume of the part of the epoxy resin in which the electric tree is most likely to progress is reduced because of filling of the nano-particles and the micro-particles in combination.

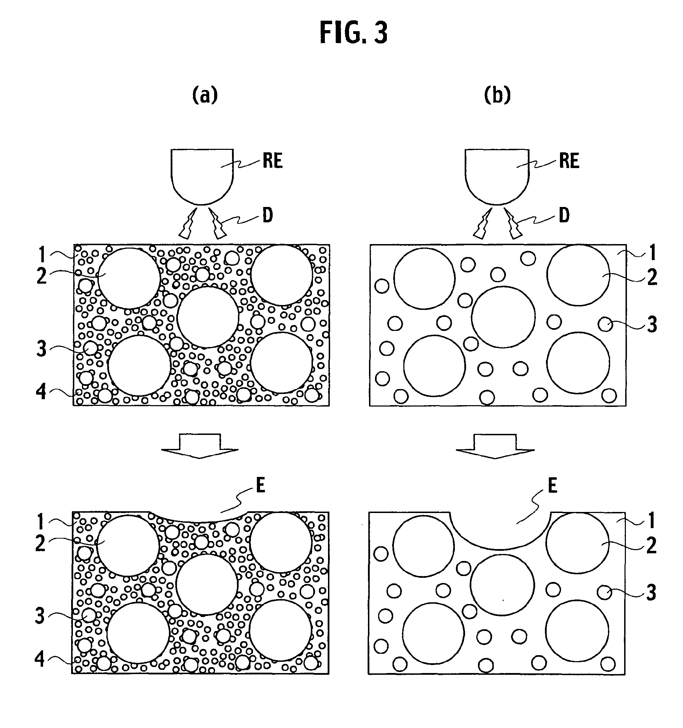

Further, in the measurement of the anti partial discharge degradation properties, it is understood that degradation depths of the cast insulators according to the examples 1 and 2 is smaller than those of the cast insulators according to the comparative examples 1 and 2. As shown in Fig. 3(b), in the cast insulator of the comparative example 1, the part of the epoxy resin 1 and the elastomer particles 3, both of which are less resistive to degradation under high electric fields, are selectively eroded (shown by a reference sign E in the drawing) by degradation caused by partial discharge D. On the other hand, in the cast insulators of the examples 1-2, as shown in Fig. 3(a), as the nano-particles 4, which are superior in degradation resistance to the partial discharge D, are dispersed, the erosion E at the part of the epoxy resin 1 caused by the partial discharge D can be suppressed. Further, as the elastomer particles 3 are surrounded by the nano-particles 4, they are protected from the erosion E. Further, the cast insulators of the examples 1 and 2 show smaller degradation than the cast insulator of the comparative example 2 in which only the nano-particles are filled. As shown in Fig. 2(c), the cast insulator of the comparative example 2 suppresses degradation caused by partial discharge by means of the filled nano-particles. In contrast, in the examples 1 and 2, as well as the effect of degradation suppression against partial discharge by means of the nano-particles, as filling of the nano-particles and the micro-particles in combination reduces the volume of the part of the epoxy resin most susceptible to erosion by the partial discharge, degradation and erosion by the partial discharge become very small.

Next, to compare the example 1 with the example 3, actions and effects on resin viscosity provided by primary grain sizes of the respective particles and the mixed amount become accountable. The resin viscosity before curing of the cast insulator according to the example 1 is only slightly higher than that of the existence comparative example 1 and therefore assures sufficient easiness of handling in work of pouring in which the cast resin composition is poured in a mold. On the other hand, the resin viscosity before curing of the cast insulator according to the example 3 is very high.

Further, to compare the example 1 with the example 3, actions and effects provided by surface modification of the particles and shearing mixing become accountable. In the cast insulator described in the example 1, the layer silicate compound as the nano-particles is dispersed in the epoxy resin by shearing mixing. Further, the respective particle surfaces are surface-treated by the silane coupling agent. On the other hand, in the cast insulator recited in the example 3, the silica particles as the nano-particles are dispersed in the epoxy resin by normal mixing. Further, surfaces of the respective particles are not surface-treated with a coupling agent.

Dispersion of the nano-particles by shearing mixing greatly influences a dispersion state of the particles in the cast insulators. When observing the dispersion states of the particles in the example 1, wherein the mixture of the epoxy resin and the nano-particles is mulled until the mixture becomes transparent, and in the example 3, wherein the mixture of the epoxy resin and the nano-particles is opaque by normal mixing, it is observed that, in the cast insulator according to the example 1, any spaces among the nano-particles-elastomer particles and among the nano-particles-micro-particles are 1µm or less. On the other hand, in the cast insulator according to the example 3, the spaces among the particles are not 1µm or less. Therefore, although the amount of the nano-particles in the cast insulator according to the example 3 is greater than that of the example 1, any properties of the fracture toughness, the breakdown time and the degradation depth are inferior to those of the example 1.

Further, in the layer silicate compound organically-modified by quaternary ammonium ion, surface energy of silicate layers is reduced by the quaternary ammonium ion, and interlayer spaces become lipophilic. By these effects of the organic modification by quaternary ammonium ion, affinity of the layer silicate compound with the epoxy resin becomes high, and mixing with shearing stress causes that the layer silicate compound delaminates at the interlayer spaces so that the respective layers can become dispersed uniformly in the cast resin composition. Further, as the surface modification treatment by the silane coupling agent chemically bonds the interfaces between the particles and the resin, macromolecules of the epoxy resin becomes easily restricted and therefore motion of molecule chains is suppressed, whereby reinforcing particle/resin interfaces which are weaknesses against progress of cracks.

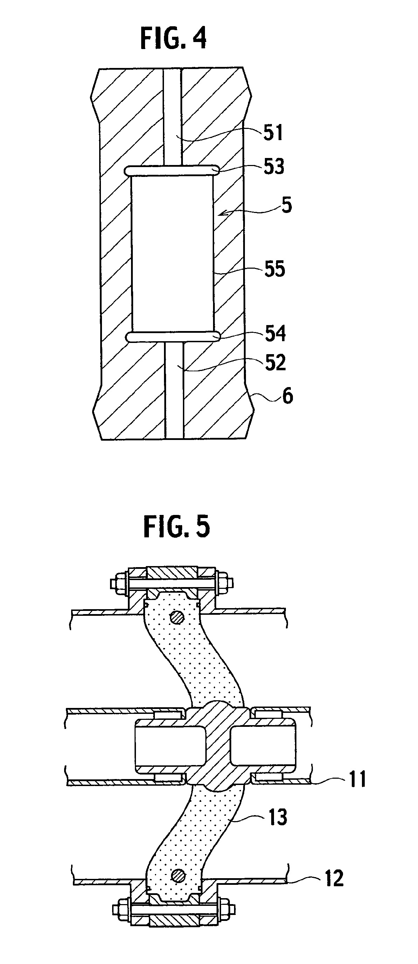

Fig. 4 and Fig. 5 shows examples of insulating structures related to the present invention. Fig. 4 is a drawing showing a resin-molded valve applied to switching gears. In Fig. 4, a vacuum valve 5 comprised of an immovable conductor 51, a movable conductor 52, end plates 53, 54, and an insulating cylinder 55 is covered by an insulating member 6. By means of the insulating member 6, the immovable conductor 51 and the movable conductor 52, which conduct high-voltage current, are insulated from the other members (not shown) installed in the switch gear. Here, the insulating member 6 is made of the insulator material which is a cured substance of the cast resin composition of the present invention.

Fig. 5 is a drawing showing an insulating structure member applied to gas insulating circuit breakers. In Fig. 5, a conductor 11 which conducts high-voltage current is insulated and supported by an insulating structure member 13 in a metal casing in which an insulating gas (sulfur hexafluoride) is filled. Here, the insulating structure member 13 is made of the insulator material which is a cured substance of the cast resin composition of the present invention. Like as Fig. 4 and Fig. 5, according to the insulating structure using the insulating material of the present invention, properties and reliability of high-voltage devices can be improved.

Although the invention has been described above by reference to certain embodiments of the invention, the invention is not limited to the embodiments described above. Modifications and variations of the embodiments described above will occur to those skilled in the art, in light of the above teachings.

### [Industrial Applicability]

A cast resin composition having high adhesion with a conductor molded therein and high quality of resistance to treeing, an insulator material, and an insulator structure therewith are provided.

## Claims

1. An insulating cast resin composition comprising:
an epoxy resin having two or more epoxy groups per single molecule;
a micro-particle including one or more substances selected from the group of silica, alumina and mullite;
an elastomer particle; and
a nano-particle including one or more substances selected from the group of layer silicates, oxides and nitrides.

2. The cast resin composition of claim 1, wherein the micro-particle is admixed in 100-500 parts in weight with 100 parts in weight of the epoxy resin.

3. The cast resin composition of claim 1, wherein a primary grain size of the micro-particle is 1-100µm.

4. The cast resin composition of claim 1, wherein the elastomer particle is admixed in 1-30 parts in weight with 100 parts in weight of the epoxy resin.

5. The cast resin composition of claim 1, wherein a primary grain size of the elastomer particle is 0.1-10µm.

6. The cast resin composition of claim 1, wherein the nano-particle is admixed in 1-30 parts in weight with 100 parts in weight of the epoxy resin.

7. The cast resin composition of claim 1, wherein a primary grain size of the nano-particle is 1-1000µm.

8. The cast resin composition of claim 1, wherein the micro-particle, the elastomer particle, and the nano-particle are treated with surface modification by one or more selected from the group of a coupling agent and a surface treatment agent.

9. An insulator material comprising a cured matter of the insulating cast resin composition of claim 1.

10. The insulator material of claim 9, wherein any spaces between the nano-particle and the elastomer particle, and between the nano-particle and the mircro-particle in the cured matter are 1µm or less.

11. An insulating structure comprising a conductor and an insulating member configured to insulate the conductor from any other member, the insulating member consisting essentially of the insulator material of claim 9.
